# EUROPEAN PATENT SPECIFICATION

(11) **EP 4 201 652 B1**
(45) Date of publication and mention of the grant of the patent: **04.11.2026**
(21) Application number: 22184672.8
(22) Date of filing: 13.07.2022
(51) Int. Cl.: B29C 65/18, B29K 101/12, B29K 105/06, B29K 307/04, B29K 309/08

(54) **WELDING METHOD AND WELDING DEVICE**
SCHWEISSVERFAHREN UND SCHWEISSVORRICHTUNG
PROCÉDÉ DE SOUDAGE ET DISPOSITIF DE SOUDAGE

(30) Priority: 21.12.2021 JP 2021206730
(43) Date of publication of application: 28.06.2023
(73) Proprietor: Mitsubishi Heavy Industries, Ltd., Tokyo 100-8332 (JP)
(72) Inventor: Iwanaga, Tomoya, Chiyoda-ku, Tokyo, 100-8332 (JP)
(74) Representative: Hoffmann Eitle

(56) References cited:
- FR-A- 1 450 509
- US-A1- 2021 370 617
- US-B2- 9 919 504

## Description

### BACKGROUND OF THE INVENTION

### 1. FIELD OF THE INVENTION

The present disclosure relates to a welding method and a welding device.

### 2. DESCRIPTION OF RELATED ART

For a structure employed for an aircraft, there is a scheme of fusing and integrating a thermoplastic composite material with another thermoplastic composite material in order to apply strength thereto (co-consolidation), for example JP 2021-49776 A which is an example of the related art.

In co-consolidation, the temperature of a welding portion of a thermoplastic composite material is increased above the melting point of the thermoplastic resin.

At this time, it is required to press a portion of a thermoplastic composite material whose temperature reaches a temperature above the melting point. This is because, if no pressure is applied, this may lead to occurrence of an internal defect. An example of an internal defect may be a void occurring between layers of the thermoplastic composite materials, delamination, or the like.

In a thermoplastic composite material that takes a structure in which sheets are laminated in a plate thickness direction of the thermoplastic composite material, heat tends to be more easily transferred in an in-plane direction (the fiber direction) than in the plate thickness direction of the thermoplastic composite material.

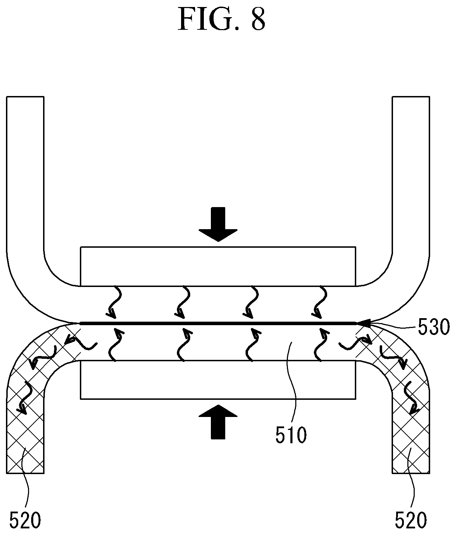

Thus, as illustrated in Fig. 8, for example, when a thermoplastic composite material is heated to increase the temperature of a portion (welding portion 510) of the thermoplastic composite material including the welding interface 530, before transferred to the overall welding portion 510, heat may be transferred to a portion 520 (a cross-hatched portion in Fig. 8) that is not welded and is distant from the welding portion in the in-plane direction.

Since the non-welding portion 520 is a portion not to be pressed, when co-consolidation is performed directly on the thermoplastic composite materials, the shape of an unpressed portion is changed due to heat and then cooled in this state, and thereby an internal defect may occur in the unpressed portion.

US 9,919,504 B2 discloses a method and device for welding members made of a composite material. The device comprises a punch, an anvil and a press to make a clamping between the punch and the anvil. The punch comprises a heating element, whereas the anvil comprises a cooling element.

FR 1 450 509 A1 discloses a method and device for welding metal reinforced plastic elements while heating and cooling parts of the plastic elements to be welded together.

US 2021/0370617 A1 describes a welding method and welding device which represents the closest prior art.

### BRIEF SUMMARY OF THE INVENTION

The present disclosure has been made in view of such circumstances, and an object is to provide a welding method and a welding device that can reduce the possibility of an internal defect occurring in an unpressed portion in co-consolidation.

This object is solved by a welding method and a welding device with the features of the independent claims. Preferred embodiments follow from the dependent claims. To achieve the above objects, the welding method and the welding device of the present disclosure employ solutions described below.

A welding method according to one embodiment of the present disclosure includes: a heating step of heating contact surfaces where members are in contact with each other, the members being stacked on each other and including thermoplastic resins; a pressing step of, at the same time as the heating step or after the heating step, pressing a predetermined portion of the members having the contact surfaces; and a cooling step of cooling a portion of the members other than the predetermined portion in the heating step.

Further, the welding device according one embodiment of the present disclosure includes: a heat-up unit configured to heat contact surfaces where members are in contact with each other, the members being stacked on each other and including thermoplastic resins; a pressing unit configured to press a predetermined portion of the members having the contact surfaces; and a cooling unit configured to cool a portion of the members other than the predetermined portion.

According to the present disclosure, it is possible to reduce the possibility of an internal defect occurring in an unpressed portion in co-consolidation.

### BRIEF DESCRIPTION OF THE SEVERAL VIEWS OF THE DRAWINGS

Fig. 1 is a diagram illustrating a state in a welding method and a front view of a welding device according to one embodiment of the present disclosure.
Fig. 2 is a perspective view of a first member and a second member stacked on each other.
Fig. 3 is a diagram illustrating a state in the welding method and a front view of the welding device according to one embodiment of the present disclosure.
Fig. 4 is a diagram illustrating a state in the welding method and a front view of the welding device according to one embodiment of the present disclosure.
Fig. 5 is a diagram illustrating a state in the welding method and a front view of the welding device according to Modified Example 1 of one embodiment of the present disclosure.
Fig. 6 is a diagram illustrating a state in a welding method and a front view of a welding device according to Modified Example 2 of one embodiment of the present disclosure.
Fig. 7 is a diagram illustrating a state in a welding method and a front view of a welding device according to another example of one embodiment of the present disclosure.
Fig. 8 is a diagram illustrating a state in a welding method and a front view of a welding device according to a reference example.

### DETAILED DESCRIPTION OF THE INVENTION

One embodiment of the present disclosure will be described below with reference to the drawings.

### [Thermoplastic Composite Material]

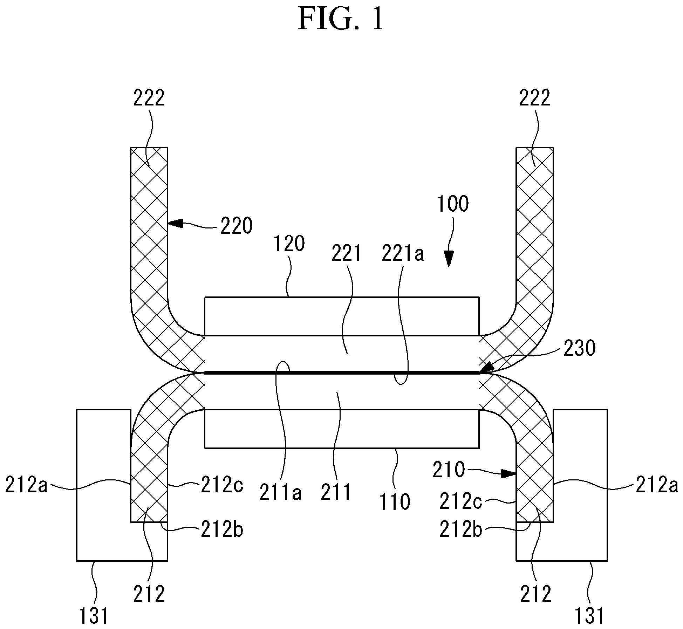

As illustrated in Fig. 1, a welding device 100 is a device for performing co-consolidation (hereinafter, simply also referred to as "welding") on a first member 210 and a second member 220.

The first member (a member containing a thermoplastic resin) 210 is a thermoplastic composite material such as fiber reinforced resin (for example, CFRTP or GFRTP) containing a thermoplastic resin.

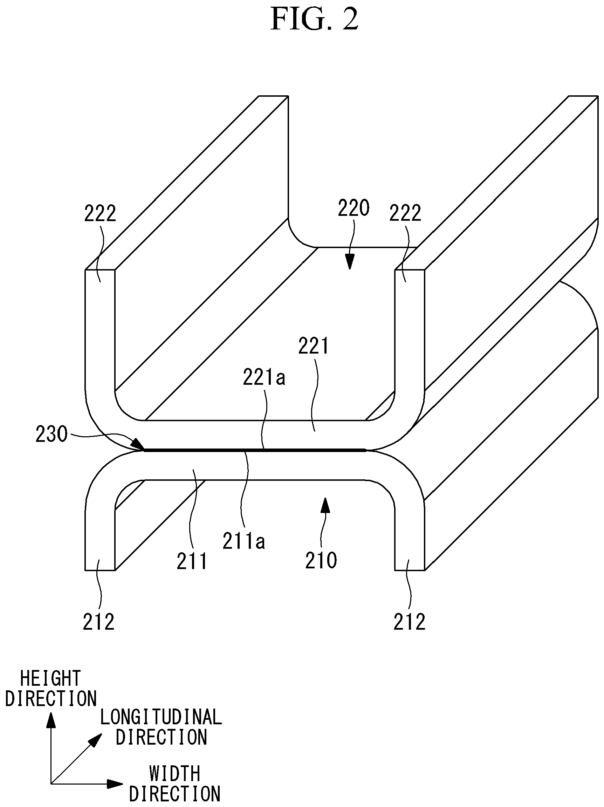

As illustrated in Fig. 2, for example, the first member 210 has a plate-like web 211 and plate-like flanges 212 vertically arranged downward in the height direction from two opposing sides of the web 211, respectively, and has a C-shaped or hat-shaped cross-sectional shape.

The second member (a member containing a thermoplastic resin) 220 is a thermoplastic composite material such as fiber reinforced resin (for example, CFRTP or GFRTP) containing a thermoplastic resin.

For example, the second member 220 has a plate-like web 221 and plate-like flanges 222 vertically arranged upward in the height direction from two opposing sides of the web 221, respectively, and has a C-shaped or hat-shaped cross-sectional shape.

The first member 210 and the second member 220 are arranged in a state where the web 211 and the web 221 are stacked and the outside faces are in contact with each other and where ends of the flange 212 and ends of the flange 222 face opposite sides.

Herein, the outside face of the web 211 in contact with the web 221 is referred to as a contact surface 211a, and the outside face of the web 221 in contact with the web 211 is referred to as a contact surface 221a. Further, the contact surface 211a and the contact surface 221a are collectively referred to as a welding interface 230.

As illustrated in Fig. 1, in the first member 210 and the second member 220 arranged in such a way, the welding device 100 welds the web 211 and the web 221 with each other.

Note that the two flanges 212 are not essential configurations in the first member 210 with which the web 211 is welded. The same applies to the flanges 222 of the second member 220.

Further, the shapes of the first member 210 and the second member 220 described above are examples, and any shapes of the first member 210 and the second member 220 can be employed as long as these shapes are in a form in which the stacked plate-like portions are in contact with each other on a plane.

### [Welding Device]

As illustrated in Fig. 1, the welding device 100 includes a first unit 110 and a second unit 120.

The first unit 110 and the second unit 120 are arranged symmetrically with respect to the welding interface 230 in such a form that interposes the first member 210 and the second member 220 stacked on each other.

In this state, the first unit 110 is of such a form that is accommodated in a region inside between the flanges 212 of the first member 210, and the second unit 120 is of such a form that is accommodated in a region inside between the flanges 222 of the second member 220.

The first unit 110 is a metal block and includes a heater (for example, a graphite heater) therein that generates heat by electricity. The heater can evenly increase the temperature of the overall first unit 110. Accordingly, it is possible to heat the first member 210 including the contact surface 211a in the first unit 110. In other words, the first unit 110 functions as a heat-up unit that heats the welding interface 230.

The dimension in the width direction (see Fig. 2) of the first unit 110 is substantially the same as the dimension in the width direction of the web 211. Further, the dimension in the length direction (see Fig. 2) of the first unit 110 is substantially the same as the dimension in the length direction of the web 211.

The second unit 120 is a metal block and includes a heater (for example, a graphite heater) therein that generates heat by electricity. The heater can evenly increase the temperature of the overall second unit 120. Accordingly, it is possible to heat the second member 220 including the contact surface 221a in the second unit 120. In other words, the second unit 120 functions as a heat-up unit that heats the welding interface 230.

The dimension in the width direction (see Fig. 2) of the second unit 120 is substantially the same as the dimension in the width direction of the web 221. Further, the dimension in the length direction (see Fig. 2) of the second unit 120 is substantially the same as the dimension in the length direction of the web 221.

Further, since the first member 210 and the second member 220 stacked on each other are interposed between the first unit 110 and the second unit 120, the web 211 of the first member 210 and the web 221 of the second member 220 can be pressed by the first unit 110 and the second unit 120 at the same time. In other words, the first unit 110 and the second unit 120 function as a pressing unit, respectively.

The welding device 100 configured as described above further includes a cooling unit.

The cooling unit is a portion, a mechanism, or a structure having a function of cooling a portion of the first member 210 and a portion of the second member 220 which are not intended to be heated above the melting point of the thermoplastic resin by the first unit 110 and the second unit 120.

Note that the term "cooling" used herein means that the temperature in a target portion is positively reduced. In other words, for example, the term excludes a phenomenon that a member at a high temperature is left in a room (in the air) in which there is no forced convection and cooled naturally and means that heat transfer is adjusted so that the temperature is reduced in a shorter time than in at least such a case of the phenomenon.

Before the cooling unit is described in detail, first, a portion which is intended to be heated by the first unit 110 and the second unit 120 (a predetermined portion in the first member 210 and a predetermined portion in the second member 220, hereinafter, which may be simply referred to as "heating portion") will be described.

Further, a portion which is not intended to be heated by the first unit 110 and the second unit 120 (a portion in the first member 210 and a portion in the second member 220 other than the predetermined portion, hereinafter, which may be simply referred to as "non-heating portion") will also be described.

The heating portion corresponds to a portion of the first member 210 and a portion of the second member 220 where resins are intended to be melted by heating the resins to a temperature above the melting point of the thermoplastic resin.

The heating portion also corresponds to a portion pressed by the first unit 110 and the second unit 120 so that no internal defect occurs.

In the case of the present embodiment, the heating portion corresponds to portions heated and pressed by the first unit 110 and the second unit 120, that is, to the web 211 and the web 221.

On the other hand, the non-heating portion corresponds to a portion of the first member 210 and a portion of the second member 220 which are intended to be maintained at a temperature less than the melting point of the thermoplastic resin so that the resin is not melted (the cross-hatched portion in Fig. 1). In other words, the non-heating portion corresponds to the portion of the first member 210 and the portion of the second member 220 other than the heating portion.

Further, the non-heating portion is also a portion (unpressed portion) that is not pressed by the first unit 110 and the second unit 120.

In the case of the present embodiment, the non-heating portion corresponds to portions which are not intended to be heated or pressed positively by the first unit 110 and the second unit 120, that is, to the flange 212 and the flange 222.

Note that the term "non-heating portion" is a term for identifying a portion and does not mean that a portion is not heated at all.

Further, in Fig. 1, although the boundary between the heating portion and the non-heating portion is indicated, this is an indication for the purpose of illustration and does not mean that such a boundary actually occurs.

Next, the cooling unit will be described with reference to a specific example.

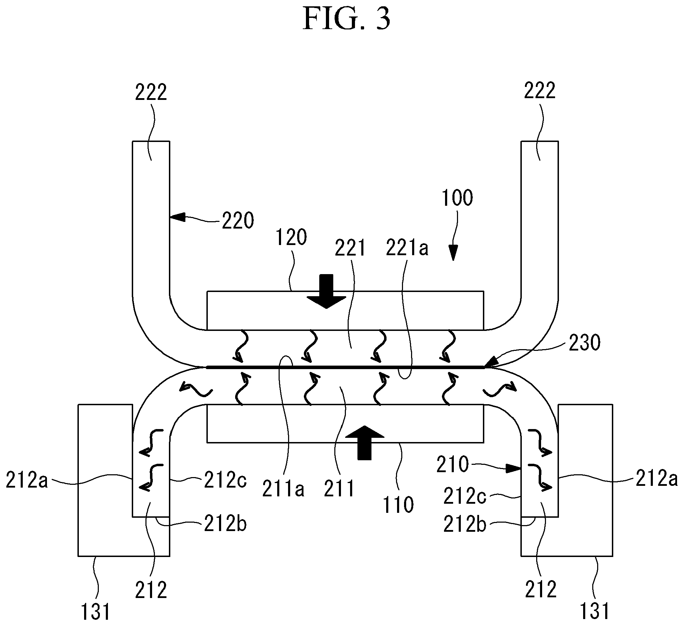

As illustrated in Fig. 1 and Fig. 3, the cooling unit is a heat absorption block 131.

The heat absorption block 131 is a block member formed of a heat capacity body. The heat capacity body is an object having higher thermal conductivity than the first member 210, for example. An example of a material of the heat capacity body may be a metal such as a copper alloy or an aluminum alloy.

It is preferable to determine the size of the heat absorption block 131 in accordance with the size of the first member 210, and it is also possible to determine the size by observing heat transfer inside the first member 210 by using thermal analysis software, for example.

The heat absorption block 131 is arranged so as to be in thermal contact with the flange 212.

Specifically, the heat absorption block 131 is in contact with the outside face 212a and an end face 212b of the flange 212.

Accordingly, heat that has been transferred from the heating portion (the web 211) to the in-plane direction of the first member 210 and then transferred to the non-heating portion (the flange 212) is removed by the heat absorption block 131. The heat transfer is simply indicated as arrows in Fig. 3.

Thus, an excessive rise in temperature of the flange 212, that is, the possibility of the thermoplastic resin being heated above the melting point can be reduced.

Note that, when the first unit 110 including a heater is arranged in the inner region between the inside faces 212c as with the present embodiment, it is preferable not to expand the heat absorption block 131 to the inside face 212c so that, when the heat absorption block 131 and the first unit 110 come close to each other, the heat absorption block 131 is not directly, thermally affected by the first unit 110, and at the same time, the heat absorption block 131 does not thermally affect the first unit 110. In other words, it is not necessary to force the heat absorption block 131 to come into contact with the inside face 212c of the flange 212.

When a thermal effect received from the first unit 110 can be ignored, however, the heat absorption block 131 may be in contact with the inside face 212c of the flange 212.

### [Welding Method]

First, as illustrated in Fig. 3, the first unit 110 and the second unit 120 are installed with respect to the first member 210 and the second member 220 on which the contact surface 211a of the web 211 and the contact surface 221a of the web 221 are stacked.

Further, the heat absorption block 131 is installed to each flange 212 of the first member 210.

Next, a heater included in the first unit 110 and a heater included in the second unit 120 are caused to generate heat, and a heating portion (the web 211 including the contact surface 211a and the web 221 including the contact surface 221a) is heated (heating step).

Accordingly, the thermoplastic resin in a heating portion is melted.

At this time, the non-heating portion (the flange 212 and the flange 222) is not a heating target. However, the non-heating portion is inevitably heated by heat transferred from the web 211 and the web 221 in the in-plane direction.

Further, in the first member 210 and the second member 220 heated in the heating step, the first unit 110 is pushed against the web 211, and the second unit 120 is pushed against the web 221 to press the heating portion (pressing step).

This reduces the possibility of an internal defect occurring in the heating portion.

Note that the heating step and the pressing step may be performed at the same time, or the pressing step may be performed after the heating step. In brief, any method may be employed as long as it provides for the pressing step on the first member 210 and the second member 220 whose temperatures are increased by the current heating or the past heating.

Furthermore, in the heating step, heat is removed from the non-heating portion (herein, only the flange 212) in the heat absorption block 131 to cool the non-heating portion (cooling step). Specifically, a temperature of the non-heating portion is maintained at a temperature less than the melting point of the thermoplastic resin.

This reduces the possibility of an internal defect occurring in an unpressed portion by the first unit 110 and the second unit 120.

Note that, in the cooling step described above, the reason why only the flange 212 is a cooling target is as follow.

That is, when the dimension in the height direction of the flange 212 is smaller than the dimension in the height direction of the flange 222, the heat capacity of the flange 212 is smaller than the heat capacity of the flange 222. This is because the temperature of the flange 212 is more easily increased and has a higher possibility of occurrence of an internal defect than the flange 222.

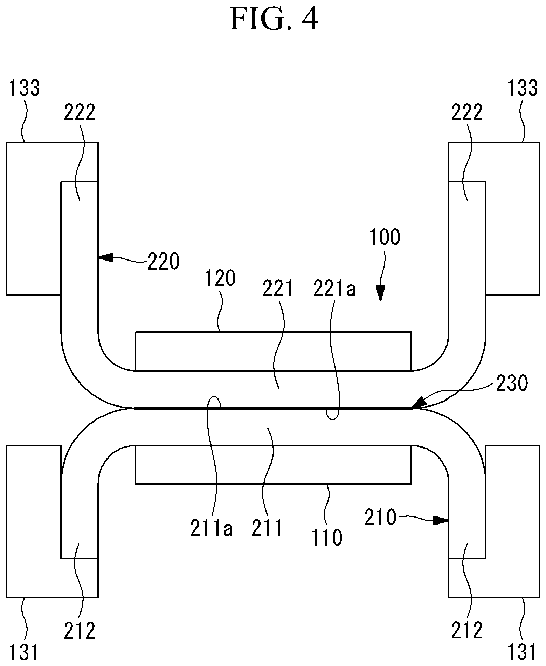

Note that, as illustrated in Fig. 4, it is apparent that the heat absorption block 133 as the cooling unit may be installed in the flange 222.

When the web 211 and the web 221 are welded at the welding interface 230, the heating by the first unit 110 and the second unit 120 ends and the integrated member of the first member 210 and the second member 220 is cooled. As described above, the welding is completed.

Note that this cooling means that the integrated member is cooled to normal temperature or room temperature unlike the cooling by the cooling unit (such as the heat absorption block 131).

### [Modified Example 1]

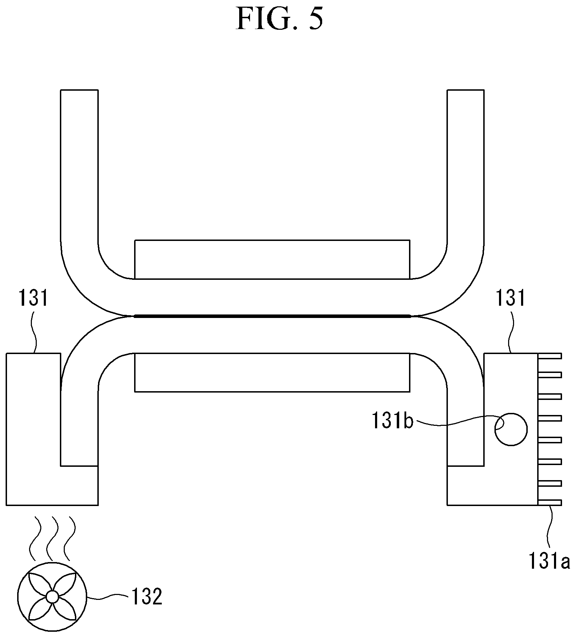

As illustrated in Fig. 5, for facilitating the heat absorption effect, a number of heat dissipation fins 131a and flow channels 131b may be provided in the heat absorption block 131. Further, a cooling fan 132 may be added to the welding device 100.

The heat dissipation fins 131a are formed on the surface of the heat absorption block 131, and heat absorbed by the heat absorption block 131 is efficiently dissipated by the increased surface area of the heat absorption block 131.

The flow channel 131b is formed inside the heat absorption block 131, and the heat absorption block 131 whose temperature has been increased is efficiently cooled by causing cooling water to flow inside.

The cooling fan 132 is an electric fan that can blow air to the heat absorption block 131, and the heat absorption block 131 is efficiently cooled by forced convection.

Note that any one of the heat dissipation fin 131a, the flow channel 131b, and the cooling fan 132 may be employed, or a plurality thereof may be employed all together.

### [Modified Example 2]

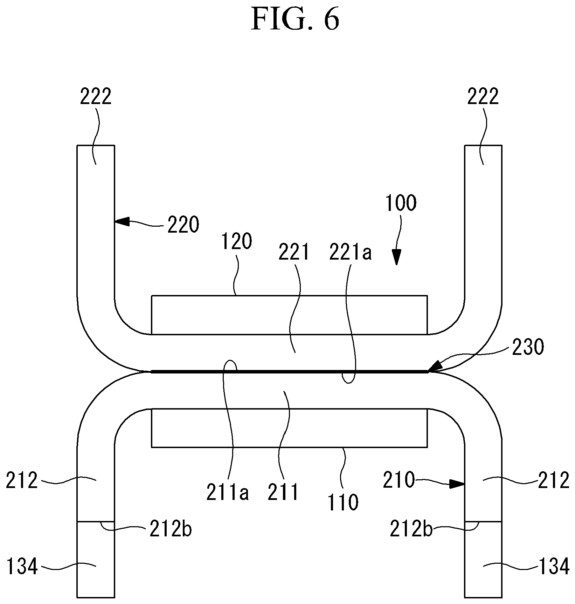

As illustrated in Fig. 6, the heat absorption block 131 as the cooling unit may be replaced with an extension composite member 134.

The extension composite member 134 is a block of the same material as the first member 210, for example, when the extension composite member 134 is in contact with the end face 212b of the flange 212, this will substantially extend the flange 212 in the height direction.

Specifically, it is preferable to extend the flange 212 to have the same height dimension as the flange 222 of the second member 220.

Accordingly, it appears that the first member 210 and the second member 220 are arranged symmetrically with respect to the welding interface 230.

When the first member 210 and the second member 220 arranged in such a manner are welded with each other, the heat capacity of the flange 212 (including the extension composite member 134) and the heat capacity of the flange 222 are the same, and it is possible to avoid a state where the temperature of only one side tends to be increased.

As a result, it is possible to reduce an excessive rise in temperature of the flange 212 and the flange 222, that is, the possibility of heating above the melting point of the thermoplastic resin.

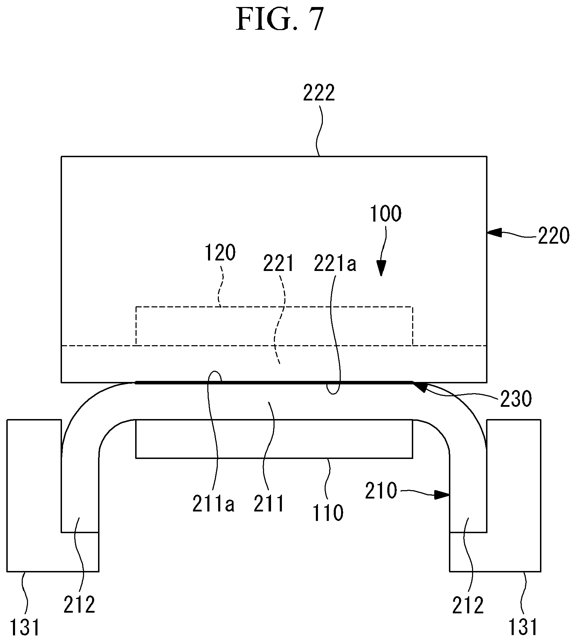

Note that, in the embodiment described above, the first member 210 and the second member 220 having C-shaped cross-sectional shapes are stacked to form an H-shaped member as whole. However, as illustrated in Fig. 7, for example, the second member 220 may be rotated about an axis in the height direction (see Fig. 2).

In other words, as long as the web 211 of the first member 210 and the web 221 of the second member 220 are stacked to form the welding interface 230, the attitude of the first member 210 and the second member 220 is not limited.

Further, as long as the first member 210 and the second member 220 are stacked to form the welding interface 230, the shapes of the first member 210 and the second member 220 are not limited.

According to the present embodiment, the following advantageous effects are achieved.

Since the embodiment includes the heating step of heating the welding interface 230, the pressing step of pressing heating portions of the first member 210 and the second member 220, and the cooling step of cooling non-heating portions of the first member 210 and the second member 220 in the heating step, it is possible to suppress the temperature of the non-heating portion (unpressed portion) from reaching the melting point or from increasing close to the melting point until the heating portion reaches the melting point of the thermoplastic resin. This can reduce the possibility of an internal defect occurring in the unpressed portion.

Further, in the cooling step, since the non-heating portion (for example, the flange 212) of the first member 210 is in thermal contact with the heat absorption block 131, the non-heating portion of the first member 210 can be cooled through the contact with the heat absorption block 131.

The heat absorption block 131 is made of a metal, for example. An example of the metal may be a copper alloy, an aluminum alloy, or the like.

Further, when the cross-sectional shape of the first member 210 is a C-shape, by cooling the outside face 212a and the end face 212b of the flange 212, it is possible to reduce the possibility of the heat absorption block 131 being directly, thermally affected by the first unit 110.

Further, it is possible to reduce the possibility of the heat absorption block 131 thermally affecting the web 211.

Note that the cooling method of the present embodiment is applicable not only to welding that heats and presses the first member 210 and the second member 220 by using the first unit 110 and the second unit 120 having heaters but also to ultrasonic welding that presses the first member 210 and the second member 220 by using pressing members and applies ultrasonic vibration to heat the contact surface 211a and the contact surface 221a or resistance welding that applies current to the heat generation resistance body to heat a heat generation resistance body inserted between the first member 210 and the second member 220 and presses the first member 210 and the second member 220 by using pressing members.

The welding method and the welding device according to one embodiment described above are understood as follows, for example.

A welding method according to one embodiment of the present disclosure includes: a heating step of heating contact surfaces (230) where members (210, 220) are in contact with each other, the members being stacked on each other and including thermoplastic resins; a pressing step of, at the same time as the heating step or after the heating step, pressing a predetermined portion of the members having the contact surfaces; and a cooling step of cooling a portion of the members other than the predetermined portion in the heating step.

According to the welding method of the present aspect, since the welding method includes: the heating step of heating contact surfaces where members are in contact with each other, the members being stacked on each other and including thermoplastic resins; the pressing step of, at the same time as the heating step or after the heating step, pressing a predetermined portion of the members having the contact surfaces; and the cooling step of cooling a portion of the members other than the predetermined portion in the heating step, it is possible to suppress the temperature of the unpressed portion from reaching the melting point or from increasing close to the melting point until the temperature of a portion of a member near a contact surface reaches the melting point of the thermoplastic resin. This can reduce the possibility of an internal defect occurring in the unpressed portion.

Herein, the unpressed portion corresponds to a portion of a member other than the predetermined portion, that is, to a portion of a member not to be pressed in the pressing step.

Further, in the welding method according to the present embodiment, in the cooling step, a heat capacity body (131) is in thermal contact with a portion of the members other than the predetermined portion.

In the welding method according to the present aspect, since a heat capacity body is in thermal contact with a portion of the members other than the predetermined portion in the cooling step, it is possible to cool the member through the contact with an object as a heat capacity body.

Further, in the welding method according to the present aspect, the heat capacity body is a metal block.

In the welding method according to the present aspect, since the heat capacity body is a metal block, a metal having high thermal conductivity can be used as the heat capacity body.

An example of the metal used for the block may be a copper alloy, an aluminum alloy, or the like.

Further, in the welding method according to the present aspect, each of the members has a bottom (211, 221) and side walls (212, 222) vertically arranged from two opposing sides of the bottom, the bottom is pressed in the pressing step, and the side walls are cooled in the cooling step.

In the welding method according to the present aspect, since members have bottoms and side walls vertically arranged from two opposing sides of the bottom, the bottoms are pressed in the pressing step, and the side walls are cooled in the cooling step, in a hat-shaped member, for example, it is possible to reduce the possibility of an internal defect occurring in the flange that is unpressed portion.

Further, in the welding method according to the present aspect, an outside face (212a) and an end face (212b) of the side walls are cooled in the cooling step.

In the welding method according to the present aspect, since the outside face and the end face of the side walls are cooled, when the flange of a member whose cross-sectional shape is a C-shape is cooled in the cooling step, for example, it is possible to cool the flange while preventing the web, which is a heating portion and a pressing portion, from being affected.

Further, the welding device according to the present aspect includes: a heat-up unit configured to heat contact surfaces where members are in contact with each other, the members being stacked on each other and including thermoplastic resins; a pressing unit configured to press a predetermined portion of the members having the contact surfaces; and a cooling unit configured to cool a portion of the members other than the predetermined portion.

### [List of References]

- 100: welding device
- 110: first unit (heat-up unit, pressing unit)
- 120: second unit (heat-up unit, pressing unit)
- 131: heat absorption block (cooling unit)
- 131a: heat dissipation fin
- 131b: flow channel
- 132: cooling fan
- 133: heat absorption block (cooling unit)
- 134: extension composite member (cooling unit)
- 210: first member (member including thermoplastic resin)
- 211: web (bottom)
- 211a: contact surface
- 212: flange (side wall)
- 212a: outside face
- 212b: end face
- 212c: inside face
- 220: second member (member including thermoplastic resin)
- 221: web (bottom)
- 221a: contact surface
- 222: flange (side wall)
- 230: welding interface

## Claims

1. A welding method comprising:
a heating step of heating contact surfaces (211a, 221a) where members (210, 220) are in contact with each other, the members being stacked on each other and including thermoplastic resins;
a pressing step of, at the same time as the heating step or after the heating step, pressing a predetermined portion of the members (210, 220) having the contact surfaces(211a, 221a); and
a cooling step of cooling a portion of the members (210, 220) other than the predetermined portion in the heating step;
**characterized in that**
each of the members (210, 220) has a bottom (211, 221) and side walls (212, 222) vertically arranged from two opposing sides of the bottom (211, 221),
wherein the bottom (211, 221) is pressed in the pressing step, and
wherein the side walls (211, 222) are cooled in the cooling step.

2. The welding method according to claim 1, wherein in the cooling step, a heat capacity body (131, 133) is in thermal contact with a portion of the members (210, 220) other than the predetermined portion.

3. The welding method according to claim 2, wherein the heat capacity body is a metal block (131, 133).

4. The welding method according to any of the claims 1 to 3, wherein an outside face (212a) and an end face (212b) of the side walls (212, 222) are cooled in the cooling step.

5. A welding device comprising:
a heat-up unit (110, 120) configured to heat contact surfaces (211a, 221a) where members (210, 220) are in contact with each other, wherein the members (210, 220) are stacked on each other and include thermoplastic resins and each of the members (210, 220) has a bottom (211, 221) and side walls (212, 222) vertically arranged from two opposing sides of the bottom (211, 221);
a pressing unit (110, 120) configured to press the bottom (211, 221) of the members (210, 220) having the contact surfaces (211a, 221a); and
a cooling unit (133, 134) configured to cool the side walls (211, 222) of the members (210, 220).

## Patentansprüche

1. Schweißverfahren, umfassend:
einen Erwärmungsschritt des Erwärmens von Kontaktflächen (211a, 221a), an denen Bauteile (210, 220) miteinander in Kontakt stehen, wobei die Bauteile aufeinander gestapelt sind und thermoplastische Harze einschließen;
einen Pressschritt des Pressens eines vorbestimmten Abschnitts der Bauteile (210, 220), die die Kontaktflächen (211a, 221a) aufweisen, gleichzeitig mit dem Erwärmungsschritt oder nach dem Erwärmungsschritt; und
einen Kühlschritt des Kühlens eines Abschnitts der Bauteile (210, 220) außer dem vorbestimmten Abschnitt im Erwärmungsschritt;
**dadurch gekennzeichnet, dass**
jedes der Bauteile (210, 220) einen Boden (211, 221) und Seitenwände (212, 222) aufweist, die von zwei gegenüberliegenden Seiten des Bodens (211, 221) vertikal angeordnet sind,
wobei der Boden (211, 221) im Pressschritt gepresst wird, und
wobei die Seitenwände (211, 222) im Kühlschritt gekühlt werden.

2. Schweißverfahren nach Anspruch 1, wobei im Kühlschritt ein Wärmekapazitätskörper (131, 133) mit einem Abschnitt der Bauteile (210, 220) außer dem vorbestimmten Abschnitt in thermischem Kontakt steht.

3. Schweißverfahren nach Anspruch 2, wobei der Wärmekapazitätskörper ein Metallblock (131, 133) ist.

4. Schweißverfahren nach einem der Ansprüche 1 bis 3, wobei eine Außenfläche (212a) und eine Endfläche (212b) der Seitenwände (212, 222) im Kühlschritt gekühlt werden.

5. Schweißvorrichtung, umfassend:
eine Erwärmungseinheit (110, 120), die ausgebildet ist, Kontaktflächen (211a, 221a) zu erwärmen, an denen Bauteile (210, 220) miteinander in Kontakt stehen, wobei die Bauteile (210, 220) aufeinander gestapelt sind und thermoplastische Harze einschließen und jedes der Bauteile (210, 220) einen Boden (211, 221) und Seitenwände (212, 222) aufweist, die von zwei gegenüberliegenden Seiten des Bodens (211, 221) vertikal angeordnet sind;
eine Presseinheit (110, 120), die ausgebildet ist, den Boden (211, 221) der Bauteile (210, 220), die die Kontaktflächen (211a, 221a) aufweisen, zu pressen; und
eine Kühleinheit (133, 134), die ausgebildet ist, die Seitenwände (211, 222) der Bauteile (210, 220) zu kühlen.

## Revendications

1. Procédé de soudage comprenant :
une étape de chauffage, consistant à chauffer des surfaces de contact (211a, 221a) au niveau desquelles des éléments (210, 220) sont en contact l'un avec l'autre, les éléments étant empilés l'un sur l'autre et incluant des résines thermoplastiques ;
une étape de pressage, consistant, en même temps que l'étape de chauffage ou après l'étape de chauffage, à presser une portion prédéterminée des éléments (210, 220) présentant les surfaces de contact (211a, 221a) ; et
une étape de refroidissement, consistant à refroidir une portion des éléments (210, 220) autre que la portion prédéterminée dans l'étape de chauffage ;
**caractérisé en ce que**
chacun des éléments (210, 220) présente un fond (211, 221) et des parois latérales (212, 222) disposées verticalement à partir de deux côtés opposés du fond (211, 221),
dans lequel le fond (211, 221) est pressé dans l'étape de pressage, et
dans lequel les parois latérales (211, 222) sont refroidies dans l'étape de refroidissement.

2. Procédé de soudage selon la revendication 1, dans lequel, dans l'étape de refroidissement, un corps à capacité thermique (131, 133) est en contact thermique avec une portion des éléments (210, 220) autre que la portion prédéterminée.

3. Procédé de soudage selon la revendication 2, dans lequel le corps à capacité thermique est un bloc métallique (131, 133).

4. Procédé de soudage selon l'une quelconque des revendications 1 à 3, dans lequel une face extérieure (212a) et une face d'extrémité (212b) des parois latérales (212, 222) sont refroidies dans l'étape de refroidissement.

5. Dispositif de soudage comprenant :
une unité de chauffage (110, 120), configurée pour chauffer des surfaces de contact (211a, 221a) au niveau desquelles des éléments (210, 220) sont en contact l'un avec l'autre, dans lequel les éléments (210, 220) sont empilés l'un sur l'autre et incluent des résines thermoplastiques et chacun des éléments (210, 220) présente un fond (211, 221) et des parois latérales (212, 222) disposées verticalement à partir de deux côtés opposés du fond (211, 221) ;
une unité de pressage (110, 120), configurée pour presser le fond (211, 221) des éléments (210, 220) présentant les surfaces de contact (211a, 221a) ; et
une unité de refroidissement (133, 134), configurée pour refroidir les parois latérales (211, 222) des éléments (210, 220).
